# EUROPEAN PATENT SPECIFICATION

(11) **EP 1 739 349 B1**
(45) Date of publication and mention of the grant of the patent: **10.06.2020**
(21) Application number: 06116085.9
(22) Date of filing: 26.06.2006
(51) Int. Cl.: F23D 14/12, F23C 13/00, H01M 8/04029, H01M 8/04007, H01M 8/04276, F24C 3/12

(54) **Energy producing apparatus**
Vorrichtung zur Energiegewinnung
Dispositif de production d'énergie

(30) Priority: 27.06.2005 IT RM20050333
(43) Date of publication of application: 03.01.2007
(73) Proprietor: Albore, Giovanni Luigi, 74100 Taranto (IT)
(72) Inventor: Albore, Giovanni Luigi, 74100 Taranto (IT)
(74) Representative: Papa, Elisabetta

(56) References cited:
- WO-A2-98/04011
- GB-A- 491 169
- JP-A- H09 108 106
- US-A- 4 171 947

## Description

The present invention refers to a thermal and electrical energy producing apparatus, and in particular to a thermal and electrical energy producing cooktop useful in a household and/or industrial field.

The present invention is especially useful in private dwellings and in all those structures in which a food preparation and meal service is delivered, and concomitantly there subsists the need to attain a supply of thermoelectrical energy in excess with respect to that required for food cooking, to be destined to other uses for the operation of the structures themselves on the whole.

The thermal and electrical energy producing apparatus according to the present invention will hereinafter be described according to an embodiment thereof specially adapted to operate as a cooktop.

However, evidently the energy produced by the apparatus according to the present invention may be destined to uses other than food cooking.

Therefore, the present invention finds useful employ for producing energy in hotels, hospitals, industries, theatres, offices and the like, as well as in the field of catering services, e.g. restaurants, canteens or self-services, dining facilities of barracks or of educational institutes.

The use of a device according to the present invention can prove extremely convenient, e.g., besides for the efficient cooking of foods, also for the heating of sanitary water; the thermal conditioning of household and non-household environments; the operation of white goods.

The ever more pressing need to limit energy consumptions, strengthened by the newly-introduced regulations aimed at promoting a more rational use of resources, and the expectation of a sustainable development, by now call for aiming at an ever increased energy saving in the designing of systems used in household and/or industrial and production environments.

For this purpose, a well-known problem is that of the costs entailed in the concomitant yet independent use, within a dwelling or production unit, of food cooking units and systems such as the heating and conditioning ones.

Even when a same energy source is used for different purposes, as in the case of methane employed for food cooking and water heating, the minimizing of energy dissipations is not set as a priority for the systems commonly adopted in dwellings and in today's structures.

To date, generally an efficient recovery of residual energy quantities from heating, conditioning and cooking processes is not carried out.

Therefore, such residual energy quantities get lost, and are neither reconverted nor exploited, if not minimally, for uses different from the original ones in the economy of the structure involved.

E.g., well above the 97% of the thermochemical energy produced by combustion in common cooktops is dissipated according to the laws of thermodynamics.

US4171947A discloses a flameless catalytic combustion apparatus including a combustion chamber comprising: a fuel inlet, an outlet, a combustion path between the inlet and outlet, a fuel permeable catalytic mass in the chamber on the path, a heat exchange wall adjacent the path adapted to extract a substantial quantity of heat from the catalyst mass and reduce the temperature of combustion gases flowing toward the outlet, said heat exchange wall being on one side of the path at the inlet and the conductive wall being on the other side of the path at the inlet, and a thermally conductive wall folding the combustion path so that the inlet and outlet are in heat exchange relation through said path folding wall, thereby to raise the temperature of combustion gases in the path at the outlet by heat conduction from the path at the inlet. Document JP 0 9108 106 A discloses a heating cooker provided with a fuel cell and supplying the electrical energy to other equipment as well.

GB491169A discloses a gas or electric cooking stove and an accessory heating or cooking apparatus having its own heating elements, wherein the accessory apparatus and the stove are connected together by a U-shaped member passing through or fitting around the accessory apparatus, and the accessory apparatus and stove are provided with corresponding engaging plugs and sockets.The main drawback entailed in the various thermal and/or electrical energy producing systems and apparatuses according to the known art stems from the fact that, in most cases, those are not made according to an integrated design and do not interface.

All this translates into a remarkable inconvenience for the end user, who periodically has to pay exorbitant rates on the energy consumptions effected, compared to a reduced performance of apparatuses and systems with respect to their actual potentialities.

Moreover, this constitutes a big environmental problem, with the known issues of lack of observance of limit values for emissions of pollutants like CO₂ and NOₓ, defined in the Kyoto Treaty.

An energy recovery as the abovementioned one would be viable only through a full integration of the heating, cooking and generally energy producing and supplying apparatuses and systems in a dwelling and/or production unit.

Hence, object of the present invention is to solve said problems, by proposing an energy producing apparatus as defined in claim 1.

Thanks to the energy recovery allowed by a cooktop according to the present invention, economic damages deriving from an inefficient use of energy resources are advantageously minimized.

This improves the thermochemical efficiency of up to 50% values.

Thanks to its versatility, the cooktop according to the present invention allows to produce thermal and electrical energy that can be output to a cooking unit for food preparation and/or to user systems external to the cooktop, up to a complete coverage of the energy demands for the overall operation keeping of a structure in a household and/or industrial field.

The cooktop according to the present invention constitutes a valid substitutive solution for the plurality of apparatuses and systems, generally non-interacting, which are installed in a household and/or production structure.

It may, e.g., be advantageously employed for the heating of sanitary water; for the supplying of the conditioning system and generally of all white goods.

Further advantages of the cooktop according to the present invention lie in that it is concomitantly of easy installation and laying, as well as of easy use.

Moreover, the cooktop according to the present invention is characterised by peculiar sturdiness and essentiality of its components.

Advantageously, it envisages the option of interfacing with cell phone-type mobile radio telecommunication networks, as well as with the Internet network, so as to be remotely operated in an efficient manner, via information transmission modes availing themselves of instruments of ever wider use in modern life, e.g. SMS and E-mail messages.

Further advantages, as well as the features and the operation modes of the present invention will be made apparent in the following detailed description of a preferred embodiment thereof, given by way of a non-limiting example, as well as of some variants thereof, making reference to the figures of the annexed drawings, wherein:
- figure 1 is a top perspective view of a preferred embodiment of a cooktop according to the present invention;
- figure 2 is a schematic depiction of the components of the cooktop of figure 1, as well as of its interaction with user systems external thereto, to which the cooktop supplies thermoelectrical energy;
- figure 3 is a partially sectional side view of a first embodiment of an energy producing unit, integrated in a respective cooking unit of the cooktop of figure 1;
- figure 4 is a partially sectional side view of a second embodiment of an energy producing unit, integrated in a respective cooking unit of the cooktop of figure 1;
- figure 5 is a partially sectional side view of a third embodiment of an energy producing unit, integrated in a respective cooking unit of the cooktop of figure 1;
- figure 6 is a partially sectional side view of a fourth embodiment of an energy producing unit of the cooktop of figure 1, thermally insulated with respect to the cooktop of figure 1;
- figure 7 is a partially sectional side view of a cooking unit, user of the thermal energy produced by respective and distinct energy producing units of the cooktop of figure 1;
- figure 8 is a schematic depiction of the external user systems supplied with the thermoelectrical energy produced by the cooktop of figure 1.

To describe the present invention, hereinafter reference will be made to the above-indicated figures. References to "embodiments" throughout the description which are not under the scope of the appended claims merely represent possible exemplary executions and are therefore not part of the present invention.

A cooktop 1 according to the present invention comprises a plurality of units 2a; 2b for producing thermal and electrical energy.

Said thermal and electrical energy is output by the producing units 2a; 2b to said cooktop 1 and/or to user systems external to said cooktop, in a household and/or industrial field.

The energy producing units 2a; 2b exploit the reaction capacity of a comburent and a fuel flown thereto through a supplying system.

The fuel and the comburent in the fuel cell system could be hydrogen and oxygen.

In this specific case, hydrogen and oxygen will not react by coming into direct contact therebetween, supplying instead the electrodes of a fuel cell, the anode and the cathode, respectively, combining in the presence of an electrolyte and a catalyst.

Hydrogen and oxygen will thus give rise to a combustion reaction controlled through the mediation of an electrolyte, with water production and output of electricity in the form of a direct current, transformable into alternating current for a ready use thereof.

The supplying system comprises a system of ducts 20, 21 for the fuel and the comburent, respectively.

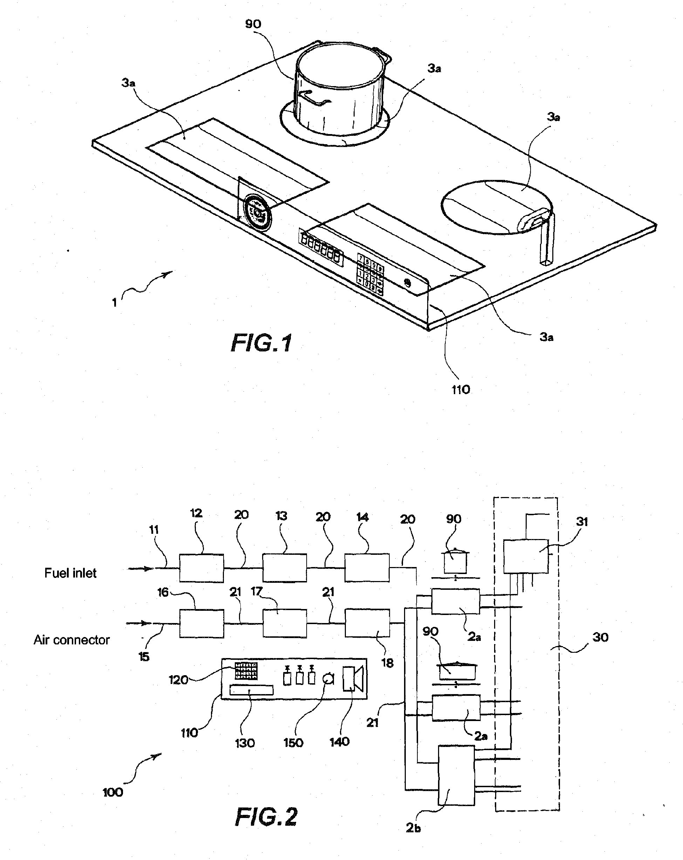

Referring to figure 2, in particular, the fuel flow is inletted through an inflow channel 11; preliminarily filtered by a first filtering block 12, e.g. mechanical-chemical; intercepted by a control valve; then, subjected to treatment by a second finer filtering block 14, e.g. with execution of a combined mechanical-chemical-ion filtering; and lastly sent to the energy producing units 2a; 2b through the ducts 20.

The comburent, air in the case at issue, is flown through a connector 15; may be treated by a first filtering block 16; subjected to pressure increase, e.g. by means of a compressor 17; then totally purified by a second filtering block 18 and sent it also to the producing units through the ducts 21.

The thermal and electrical energy produced by the producing units 2a; 2b is brought to the user systems through a distribution system 30, integrating exchangers and transformers to optimize the supply of said user systems and carry out an efficient and full energy recovery.

The distribution system 30 preferably comprises, e.g., a converting station 31 for the conversion into alternating current of electrical energy, before the outputting to the user systems.

A control unit 100, equipped with a user-programmable memory, is apt to adjust the power outputted by the energy producing units 2a, 2b.

The control unit 100 comprises a control panel 110 located on the cooktop 1, comprising data input 120 and display 130 interfaces selectively operable by a user.

The control panel 110 further comprises a loudspeaker 140 and a microphone 150 for the acoustic signalling and/or the vocal interaction between a user and the control unit 100.

Consistently with a user's settings and on the basis of data provided by a sensor system integrated in the cooktop 1, the control unit 100 is apt to actuate said supplying system and said distribution system 30.

As it can be found in figure 1, a first set of said energy producing units 2a are integrated in a respective cooking unit 3a suitable for preparing foods through the transmission of thermal energy.

A second set of said energy producing units 2b, thermally insulated with respect to the cooktop, are integrated in the cooktop 1 as better described hereinafter.

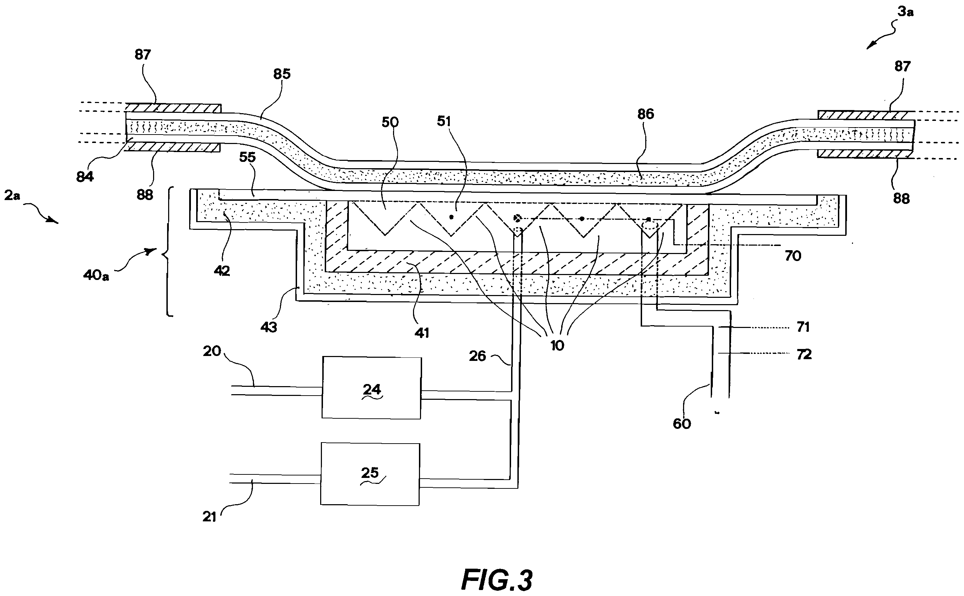

As depicted in figures 3, 4, 5 and 6, each of the energy producing units 2a; 2b is a capsule 40 apt to house an activating pellet 50 to which thermal energy and electrical energy producing fuel and comburent are flown.

The capsule 40 preferably has walls with a sandwich structure, for an improved thermal insulation and an increased mechanical resistance.

Specifically, the walls of the capsule 40 comprise a first internal layer 41 apt to provide a protective coating; a second intermediate layer 42 with a mainly insulating purpose; and a third external layer 43 with a shell-like purpose.

The capsule 40a of the first set of energy producing units 2a integrates a seat for the activating pellet 50 obtained through the cooperation of the walls of the capsule with a cover 55.

In particular, the walls of the capsule 40a are shaped so as to carry out a perfect fit with the cover 55.

Said walls may, e.g., integrate a cavity, so as to define a closed recess 51 where the pellet 50 is housed.

In the abovementioned case of the second set of energy producing units 2b, independent from the cooking units 3a and functional to the thermal and electrical energy producing not directly intended for food cooking, the capsules 40b have walls providing a closed casing 53, thermally insulated on all sides, apt to house a pellet 50 that is supported by flanges 54.

The activating pellet 50 is preferably made of reactive or polymeric refractory material, and it is shielded by an external waterproof coating. The pellet has a plurality of substantially coil-shaped ducts 10, inside which there actually take place the phenomena to which the development of thermal and electrical energy is attributable.

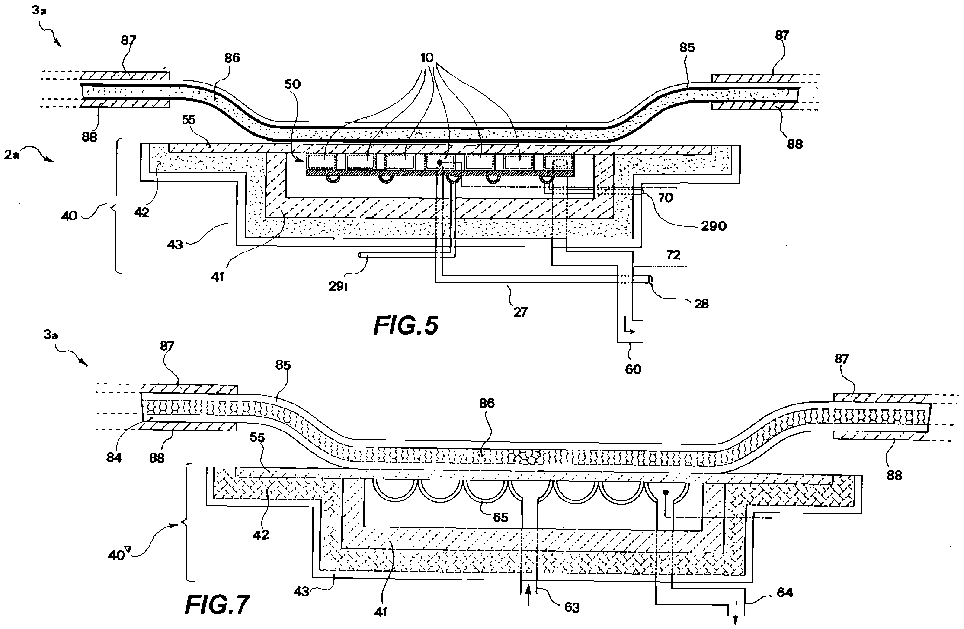

Referring to figure 5, the pellets 50 operating with fuel cells, and the fuel and the comburent are brought by respective feed lines 27, 28 to the anode and the cathode, respectively.

The capsules 40 may be equipped with a fluid-based cooling system located under the pellet 50 to prevent overheating of the latter, as illustrated in figure 5 in which an inlet duct "29i" and an outlet duct "29o" allow recirculation of a coolant in a suitable tortuous path.

When catalytic combustion occurs, the hot fumes produced by the reaction of the fuel with the comburent are conveyed, through an exhaust pipe 60 of the distribution system 30, to heat exchangers external to the capsules 40, to extract the thermal energy thereof and make it usable by user systems, like radiators and boilers for hot water production.

The water and exhaust gases, resulting from the reaction internal to the pellets 50 with fuel cells and characterised by containing no pollutants, are likewise disposed of.

The control unit 100 is in bidirectional communication with local detecting means positioned along the supplying system and/or along the distribution system 30, and/or at the energy producing units 2a, 2b.

The abovementioned local detecting means comprises thermometers 70 suitable for metering the temperature inside the pellets 50; thermometers 71 for metering the temperature of the fumes and the exhaust gases; and probes 72, e.g. lambda probes, for detecting the composition of emissions produced by the reaction of the fuel with the comburent in case of catalytic combustion.

From the probes 72 a proportional signal is sent to the control unit 100 for adjusting the flow of comburent and fuel.

Each energy producing unit 2a of said first set is embedded in the cooktop 1.

The configuration is such that, on each respective cover 55 of the energy producing units 2a, it is obtained a respective unit 3a for cooking foods that exploits the thermal energy transmitted through the cover 55.

As illustrated in figures 3 and 5, the coils 10 of the pellet 50 may be designed so as to be into contact, e.g. by welding, with the internal surface of the cover 55, so as to foster an effective heat transfer to the latter.

With regard to the specific embodiment of figure 3, the coils 10 of the pellet 50 have a triangular section for optimizing the heat transfer to the cover 55.

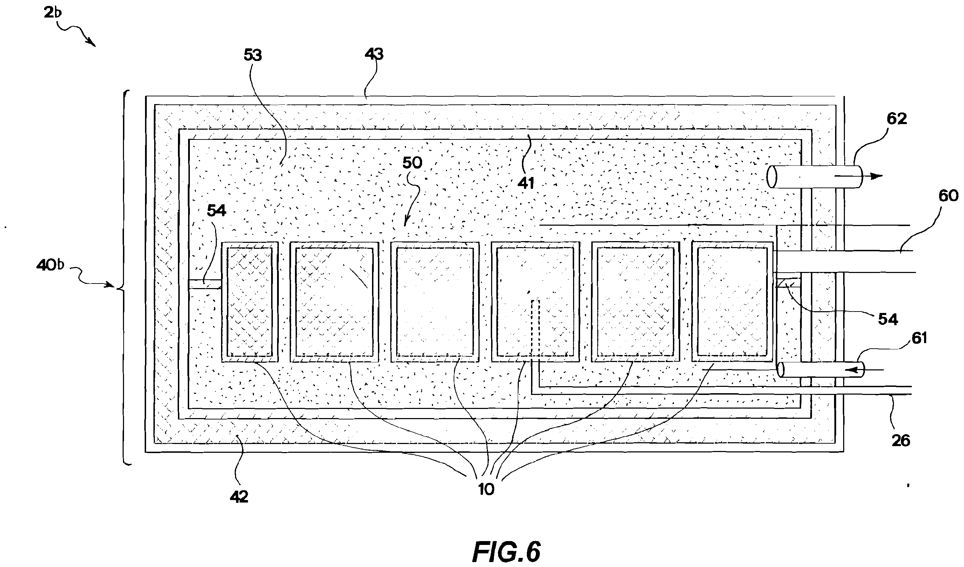

As it is evident from figure 6, the coils 10 of the pellet 50 may be immersed in a carrier fluid that is recirculated thereamong through suitable inlet 61 and outlet 62 ducts of the distribution system.

The carrier fluid, e.g. silicone oil resistant to high temperatures, is apt to collect from the surfaces into contact with the coils 10 part of the heat produced by the pellet 50 and then transfer it to heat exchangers external to the capsule 40b.

The pellets 50 operates with fuel cells, and the same electrolyte of the fuel cells may be employed as carrier fluid.

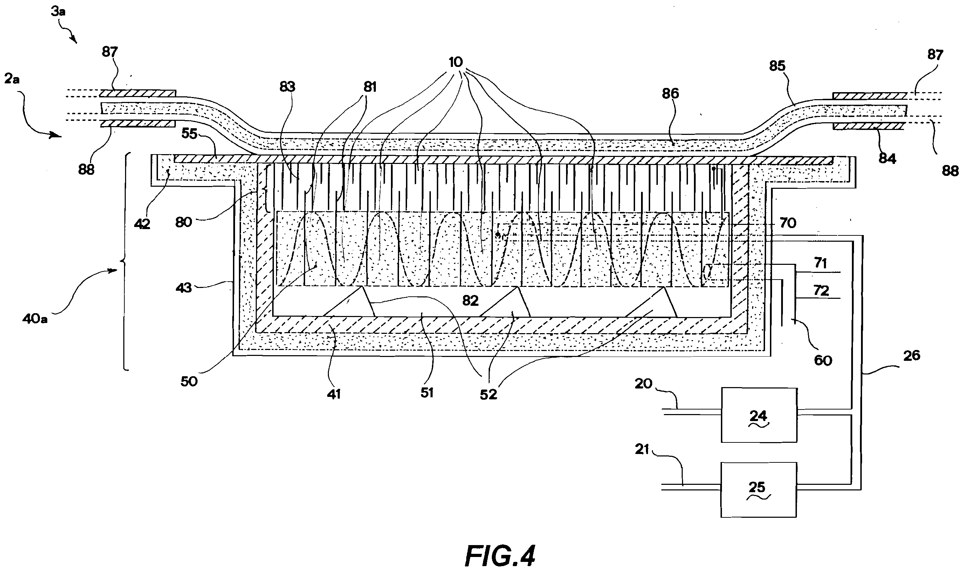

In the embodiment of the energy producing units 2a depicted in figure 4, between cover 55 and pellet 50 it is obtained an air space 80 apt to contain a fluid that keeps its heat conducting features up to beyond 250°C.

This solution may be adopted when, e.g., the welding between the pellet 50 and the cover 55 does not allow a suitable heat transfer.

The heat conducting fluid is apt to promote a heat exchange from the pellet 50 to the cover 55 through convective motions.

Said heat exchange may be boosted by a first set of pins 81 and a second set of pins 82, coming out from the surface of the pellet 50 exposed to the heat-conducting fluid and from the cover 55, respectively.

The convective motions, originated by the temperature gradient itself, may be further facilitated by perforated partitions 83 located near the base of the pins 81, 82.

In figure 7 it is depicted a cooking unit 3a whose capsule 40', according to a specific variant embodiment, does not contain a related pellet 50 suitable for energy production.

Therefore, such a capsule 40' is merely a user of the thermal energy produced by respective and distinct energy producing units of the cooktop 1.

Thanks to an adduction duct 63, an outlet duct 64 and a system of channels 65 defining a tortuous path, the carrier fluid heated by external energy producing units, is flown into contact with the cover 55.

Each cooking unit 3a comprises a first internal protective layer 84 and a second external protective layer 85, exhibiting low coefficient of adhesion and applicable into contact with the cover 55 and a cooking vessel 90, respectively.

A third layer 86, made of a soft, flexible and heat-conducting material, is arranged in an intermediate position between the first layer 84 and the second layer 85.

To ensure a control on the cooking, preferably two sensors are buried into the intermediate layer 86, at its bottom and top surface, respectively, apt to meter the thermal gradient establishing through its thickness.

Thanks to this, the control unit 100 may adjust, instant by instant, the ideal power according to values preset by the user or until optimal completion of the cooking process, when the control unit could arrange for the turning off of the cooking units 3a and emit a corresponding acoustic warning signal.

The arrangement of said three adjacent and overlapped layers 84, 85, 86 is such that the edges thereof are pinched by a peripheral coupling system.

Such a peripheral coupling system comprises a frame 87 apt to pinch said layers against a surface 88 of the cooktop 1.

The feature of flexibility of the three layers 84, 85, 86, jointly to their own weight, allows the defining of a contact surface with the cover 55, surface that is sufficiently large to receive a cooking vessel.

It is provided that the cooktop 1 according to the present invention advantageously comprises means, e.g. a telephone dial, for the remote communication between a user and/or a support centre and the control unit 100, for signalling the operating state of the cooktop 1.

Thus, assistance and ordinary and extraordinary maintenance services are facilitated.

In fact, the control unit 100 itself may, on the basis of information received, e.g., directly from the company producing the specific design of cooktop 1, self-adjust and perform a periodic check of the operating parameters.

Moreover, in the event of failures the units in charge of the maintenance may be timely alerted and provide for repairing and piece replacements over short times.

The cooktop 1 according to the present invention, thanks to its modular structure, can easily be accessed and inspected.

In case of modular systems equipped with local signalling, flashing LEDs, optionally in cooperation with the emission of a synthesized voice, may indicate the module intended to be replaced even by an average user in complete safety.

Moreover, actuation means are provided, like e.g. a mobile terminal, suitable for the transmission of remote commands on the basis of the data received from the control unit 100.

The telephone dial may e.g. be connected to a web or cell phone-type mobile radio telecommunication network, like e.g. the GSM, GPRS and UMTS systems, future evolutions or substitutive system thereof, and establish a communication with the mobile terminal, thereby allowing a user to transmit commands to the control unit 100 and to direct the operation of the cooktop 1, e.g. by sending E-mails or SMS text messages.

The cooktop 1 according to the present invention may also comprise a safety device that checks the operating state of the control unit 100 and, when a state of incorrect operation of the control unit is detected, automatically directs the interruption of fuel and comburent supply.

According to a preferred variant embodiment, the control unit 100 may establish a Wi-Fi connection with the user systems external to the cooktop 1, so as to adjust according to a user's wishes the allocation of the energy supply and the related distribution in each individual household and/or industrial and production environment.

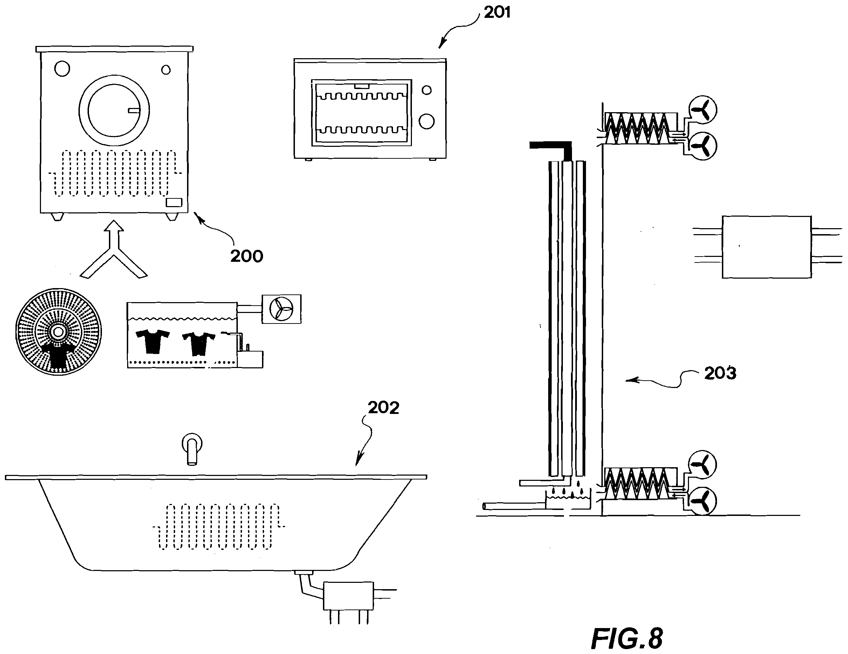

Said user systems, exemplified in figure 8, may be common-use white goods -like washing machines 200, dishwashers, tumble dryers, ovens 201, hair dryers, toasters, electric irons, steam generators for cleaning - as well as bathtubs 202 and heating systems 203, e.g. radiator ones, and/or conditioning systems, suitably adapted to best exploit the thermoelectrical energy supplied thereto.

The present invention has hereto been described according to a preferred embodiment thereof, given by way of example and not for limitative purposes.

It is understood that other embodiments may be provided, all to be construed as falling within the protective scope thereof, as defined by the appended claims.

## Claims

1. An energy producing apparatus, comprising:
- a plurality of units (2a, 2b) for producing thermal and electrical energy, that can be outputted to a cooktop (1) and/or to user systems (200, 201, 202, 203) external to said cooktop (1);
- a supplying system apt to inlet a comburent and a fuel in said energy producing units (2a, 2b);
- a distribution system (30) for said thermal and electrical energy produced; and
- a user-programmable control unit (100), apt to adjust the power outputted by said energy producing units (2a, 2b) and to actuate said supplying system and said distribution system (30);
wherein a first set of said energy producing units (2a) is integrated in respective cooking units (3a) for preparing foods through the transmission of thermal energy; and
**characterised in that** it further comprises a second set of said energy producing units (2b), thermally insulated with respect to the cooktop (1);
and **in that** each of said energy producing units of said first and second sets (2a; 2b) is a capsule (40, 40a; 40b) apt to house an activating pellet (50) to which said thermal energy and/or electrical energy producing comburent and fuel are flown,
wherein said pellet (50) is with fuel cells and produces thermal energy and electrical energy in the form of direct current.

2. The apparatus according to claim 1, wherein said capsule (40, 40a; 40b) has walls with a sandwich structure, comprising:
- a first internal layer (41) providing a protective coating;
- a second intermediate layer (42) with an insulating purpose; and
- a third external layer (43) with a shell-like purpose.

3. The apparatus according to claim 1 or 2, wherein said capsule (40a) of said first set of energy producing units (2a) integrates a seat for said activating pellet (50) obtained through the cooperation of said walls with a cover (55), said walls being shaped to fit with said cover (55) so as to define a closed recess (51) where said activating pellet (50) is housed.

4. The apparatus according to claim 3, wherein said walls integrate a cavity.

5. The apparatus according to claim 2, wherein said capsule (40b) of said second set of energy producing units (2b) has walls providing a closed casing (53), thermally insulated on all sides, apt to house said activating pellet (50).

6. The apparatus according to one of the preceding claims, wherein said activating pellet (50) has a plurality of substantially coil-shaped ducts (10).

7. The apparatus according to one of the preceding claims, wherein said pellet (50) is made of reactive refractory material and shielded by an external waterproof coating.

8. The apparatus according to one of the claims 6 or 7, when dependent from one of the claims 1 to 4, wherein the coils (10) of said pellet (50) are into contact with an internal surface of said cover (55) so as to optimize the heat transfer to said cover (55).

9. The apparatus according to one of the claims 6 to 8, when dependent from one of the claims 1 to 4, wherein said coils (10) of said pellet (50) are immersed in a carrier fluid apt to collect, from the surface into contact with the coils (10), part of the heat produced by the pellet (50) and to carry it through said distribution system (30) to heat exchangers external to the capsule (40).

10. The apparatus according to any one of the claims 3 to 9, claim 5 excluded, wherein between said cover (55) and said pellet (50) it is obtained an air space (80) apt to contain a heat-conducting fluid apt to promote a heat exchange from said pellet (50) to said cover (55) through convective motions.

11. The apparatus according to claim 10, wherein said heat exchange is boosted by a first set of pins (82) and a second set of pins (81), coming out from the surface of the pellet (50) exposed to said fluid and from the cover (55), respectively.

12. The apparatus according to claim 11, wherein said convective motions are facilitated by perforated partitions (83) located near the base of said pins (81, 82).

13. The apparatus according to any one of the preceding claims, comprising a fluid-based cooling system located under said pellet (50) to prevent overheating of the latter.

14. The apparatus according to any one of the preceding claims, wherein said distribution system comprises a converting station (31) for the conversion into alternating current of said electrical energy, before the outputting to said user systems.

15. The apparatus according to any one of the claims 9 to 14, wherein said carrier fluid is the electrolyte of the fuel cells.

16. The apparatus according to any one of the preceding claims, wherein hot fumes produced by the reaction of said fuel with said comburent are conveyed through said distribution system (30; 60) to heat exchangers external to the capsule (40).

17. The apparatus according to any one of the claims 3 to 16, claim 5 excluded, wherein each of said first set of energy producing units (2a) is embedded in said cooktop (1), the configuration being such that on each respective cover (55) of said first set of energy producing units (2a) it is obtained a respective unit (3a) for cooking foods by means of the thermal energy transmitted through said cover (55).

18. The apparatus according to the preceding claim, wherein each of said cooking units (3a) comprises a first internal protective layer (84) and a second external protective layer (85) exhibiting low coefficient of adhesion and applicable into contact with said cover (55) and into contact with a cooking vessel (90), respectively; and a third layer (86), intermediate to said first and second layer (84,85), made of a soft, flexible and heat-conducting material, the arrangement being such that the edges of said overlapped layers (84, 85, 86) are pinched by a peripheral coupling system.

19. The apparatus according to the preceding claim, wherein said peripheral coupling system comprises a frame (87) apt to pinch said layers (84, 85, 86) against a surface (88) of said cooktop (1).

20. The apparatus according to one of the preceding claims, wherein said control unit (100) comprises a control panel (110) located on said cooktop (1), comprising data input (120) and display (130) interfaces selectively operable by a user.

21. The apparatus according to the preceding claim, wherein said control panel (110) further comprises a loudspeaker (140) and a microphone (150) for the acoustic signalling and/or the vocal interaction between a user and said control unit (100).

22. The apparatus according to one of the preceding claims, wherein said control unit (100) is in bidirectional communication with local detecting means (70, 71, 72) positioned along said supplying system and/or along said distribution system and/or at said energy producing unit.

23. The apparatus according to the preceding claim when dependent on one of the claims 18 to 22, wherein said local detecting means (70, 71, 72) comprises probes (72) for detecting the temperatures of said hot fumes produced by the reaction of said fuel with said comburent, so that a proportional signal be sent to said control unit (100) for adjusting the flow of comburent and fuel.

24. The apparatus according to one of the preceding claims, comprising means for the remote communication between a user and/or a support centre and said control unit, for signalling the operating state of said cooktop (1), as well as actuation means suitable for the transmission of corresponding remote commands.

25. The apparatus according to one of the preceding claims, comprising a safety device that checks the operating state of said control unit and, when a state of incorrect operation of the control unit (100) is detected, automatically directs the interruption of fuel and comburent supply, concomitantly informing a user and/or a support centre.

26. The apparatus according to one of the preceding claims, wherein said control unit (100) is in Wi-Fi connection with said user systems.

## Patentansprüche

1. Vorrichtung zur Energiegewinnung, umfassend:
eine Vielzahl von Einheiten (2a, 2b) zur Gewinnung thermischer und elektrischer Energie, die an ein Kochfeld (1) und/oder an Nutzersysteme (200, 201, 202, 203) außerhalb des Kochfeldes (1) ausgegeben werden kann;
ein Versorgungssystem, das geeignet ist, ein Oxidationsmittel ("comburant") und einen Brennstoff ("fuel") in die Einheiten zur Energiegewinnung (2a, 2b) einzuleiten;
ein Verteilungssystem (30) für die gewonnene thermische und elektrische Energie; und
eine nutzerprogrammierbare Steuereinheit (100), die geeignet ist, um die von den Einheiten zur Energiegewinnung (2a, 2b) ausgegebene Leistung einzustellen und das Versorgungssystem und das Verteilungssystem (30) zu betreiben;
wobei ein erster Satz von Einheiten zur Energiegewinnung (2a) in jeweilige Kocheinheiten (3a) zur Zubereitung von Nahrung durch die Übertragung thermischer Energie integriert ist; und
**dadurch gekennzeichnet, dass** sie weiterhin einen zweiten Satz der Einheiten zur Energiegewinnung (2b) umfasst, die thermisch in Bezug auf das Kochfeld (1) isoliert sind;
und dadurch, dass jede der Einheiten zur Energiegewinnung von dem ersten und dem zweiten Satz (2a; 2b) eine Kapsel (40, 40a; 40b) ist, die geeignet ist, ein Aktivierungspellet (50) aufzunehmen, zu dem das Oxidationsmittel und der Brennstoff zum Gewinnen der thermischen Energie und/oder der elektrischen Energie geleitet werden,
wobei das Pellet (50) Brennstoffzellen aufweist und thermische Energie sowie elektrische Energie in Form eines Gleichstroms erzeugt.

2. Vorrichtung nach Anspruch 1, wobei die Kapsel (40, 40a; 40b) Wände mit einer Sandwich-Struktur aufweist, umfassend:
eine erste innere Schicht (41), die eine Schutzbeschichtung zur Verfügung stellt;
eine zweite Zwischenschicht (42) mit einem isolierenden Zweck; und
eine dritte äußere Schicht (43) mit einem schalenartigen Zweck.

3. Vorrichtung nach Anspruch 1 oder 2, wobei die Kapsel (40a) des ersten Satzes von Einheiten zur Energiegewinnung (2a) einen Sitz für das aktivierende Pellet (50) integriert, erhalten durch die Zusammenwirkung der Wände mit einer Abdeckung (55), wobei die Wände so geformt sind, dass sie mit der Abdeckung (55) zusammenpassen, um so eine geschlossene Vertiefung (51) zu definieren, wo das aktivierende Pellet (50) aufgenommen ist.

4. Vorrichtung nach Anspruch 3, wobei die Wände einen Hohlraum integrieren.

5. Vorrichtung nach Anspruch 2, wobei die Kapsel (40b) des zweiten Satzes von Einheiten zur Energiegewinnung (2b) Wände aufweist, die ein geschlossenes Gehäuse (53) zur Verfügung stellen, thermisch an allen Seiten isoliert, geeignet, um das aktivierende Pellet (50) aufzunehmen.

6. Vorrichtung nach einem der vorhergehenden Ansprüche, wobei das aktivierende Pellet (50) eine Vielzahl im Wesentlichen spiralförmiger Führungen (10) aufweist.

7. Vorrichtung nach einem der vorhergehenden Ansprüche, wobei das Pellet (50) aus einem reaktiven hitzebeständigen Material gefertigt ist und durch eine externe wasserdichte Ummantelung abgeschirmt ist.

8. Vorrichtung nach einem der Ansprüche 6 oder 7, soweit diese von einem der Ansprüche 1 bis 4 abhängig sind, wobei die Spiralen (10) des Pellet (50) in Kontakt mit einer inneren Oberfläche der Abdeckung (55) stehen, um so die Wärmeübertragung zu der Abdeckung (55) zu optimieren.

9. Vorrichtung nach einem der Ansprüche 6 bis 8, soweit diese von einem der Ansprüche 1 bis 4 abhängig sind, wobei die Spiralen (10) des Pellet (50) in ein Trägerfluid getaucht sind, das geeignet ist, von der Oberfläche im Kontakt mit den Spiralen (10) einen Teil der Wärme aufzunehmen, die durch das Pellet (50) erzeugt wird, und diese durch das Verteilungssystem (30) zu Wärmetauschern außerhalb der Kapsel (40) zu tragen.

10. Vorrichtung nach einem der Ansprüche 3 bis 9, Anspruch 5 ausgenommen, wobei zwischen der Abdeckung (55) und dem Pellet (50) ein Luftraum (80) vorliegt, der geeignet ist, ein wärmeleitendes Fluid aufzunehmen, das geeignet ist, einen Wärmeaustausch von dem Pellet (50) zu der Abdeckung (55) durch konvektive Bewegungen zu fördern.

11. Vorrichtung nach Anspruch 10, wobei der Wärmeaustausch durch einen ersten Satz Nadeln (82) und einen zweiten Satz Nadeln (81) verstärkt wird, die aus der Oberfläche des Pellet (50) hervortreten und dem Fluid ausgesetzt sind beziehungsweise aus der Abdeckung (55).

12. Vorrichtung nach Anspruch 11, wobei die konvektiven Bewegungen durch perforierte Partitionen (83) ermöglicht werden, die in der Nähe der Basis der Nadeln (81, 82) angeordnet sind.

13. Vorrichtung nach einem der vorhergehenden Ansprüche mit einem fluidbasierten Kühlsystem, das unter dem Pellet (50) angeordnet ist, um eine Überhitzung von letzterem zu vermeiden.

14. Vorrichtung nach einem der vorhergehenden Ansprüche, wobei das Verteilungssystem eine Wandelstation (31) zum Wandeln der elektrischen Energie in Wechselstrom umfasst, bevor diese an das Nutzersystem ausgegeben wird.

15. Vorrichtung nach einem der Ansprüche 9 bis 14, wobei das Trägerfluid das Elektrolyt der Brennstoffzellen ist.

16. Vorrichtung nach einem der vorhergehenden Ansprüche, wobei heiße Gase, die durch die Reaktion des Brennstoffs mit dem Oxidationsmittel erzeugt werden, durch das Verteilungssystem (30; 60) an Wärmetauscher außerhalb der Kapsel (40) gefördert werden.

17. Vorrichtung nach einem der Ansprüche 3 bis 16, Anspruch 5 ausgenommen, wobei jede aus dem ersten Satz von Einheiten zur Energiegewinnung (2a) in dem Kochfeld (1) eingebettet ist, wobei die Konfiguration derart ist, dass auf jeder jeweiligen Abdeckung (55) des ersten Satzes von Einheiten zur Energiegewinnung (2a) eine jeweilige Einheit (3a) zum Kochen von Nahrungsmitteln mittels der thermischen Energie vorliegt, die durch die Abdeckung (55) übertragen wird.

18. Vorrichtung nach dem vorhergehenden Anspruch, wobei jede der Kocheinheiten (3a) eine erste innere Schutzschicht (84) und eine zweite äußere Schutzschicht (85) umfasst, die einen kleinen Adhäsionskoeffizienten aufweisen und im Kontakt mit der Abdeckung (55) beziehungsweise im Kontakt mit einem Kochgefäß (90) anwendbar sind;
wobei eine dritte Schicht (86) zwischen der ersten und der zweiten Schicht (84, 85) aus einem weichen, flexiblen und wärmeleitenden Material vorgesehen ist, wobei die Anordnung derart ist, dass die Kanten der überlappenden Schichten (84, 85, 86) durch ein Randkopplungssystem zusammengedrückt sind.

19. Vorrichtung nach dem vorhergehenden Anspruch, wobei das Randkopplungssystem einen Rahmen (87) umfasst, der geeignet ist, um die Schichten (84, 85, 86) gegen die Oberfläche (88) des Kochfelds (1) zu drücken.

20. Vorrichtung nach einem der vorhergehenden Ansprüche, wobei die Steuereinheit (100) ein Steuer-Panel (110) umfasst, das auf dem Kochfeld (1) angeordnet ist, mit Dateneingabe- (120) und Anzeigeschnittstellen (130), selektiv durch einen Nutzer bedienbar.

21. Vorrichtung nach dem vorhergehenden Anspruch, wobei das Steuer-Panel (110) weiterhin einen Lautsprecher (140) und ein Mikrofon (150) für die akustische Signalisierung und/oder die Sprachbeeinflussung zwischen einem Nutzer und der Steuereinheit (100) umfasst.

22. Vorrichtung nach einem der vorhergehenden Ansprüche, wobei die Steuereinheit (100) sich in bidirektionaler Kommunikation mit lokalen Erfassungsmitteln (70, 71, 72) befindet, die entlang des Versorgungssystems und/oder entlang des Verteilungssystems und/oder an der Einheit zur Energiegewinnung positioniert sind.

23. Vorrichtung nach dem vorhergehenden Anspruch, soweit abhängig von einem der Ansprüche 18 bis 22, wobei die lokalen Erfassungsmittel (70, 71, 72) Sonden (72) zum Erfassen der Temperaturen von heißen Gasen umfassen, die durch die Reaktion des Brennstoffs mit dem Oxidationsmittel erzeugt werden, so dass ein proportionales Signal an die Steuereinheit (100) zum Einstellen des Flusses von Oxidationsmittel und Brennstoff gesendet wird.

24. Vorrichtung nach einem der vorhergehenden Ansprüche mit Mitteln für die Fernkommunikation zwischen einem Nutzer und/oder einem Unterstützungszentrum und der Steuereinheit zum Signalisieren des Betriebszustands des Kochfeldes (1) sowie als Betätigungsmittel, die für die Übertragung von entsprechenden Fernbefehlen geeignet sind.

25. Vorrichtung nach einem der vorhergehenden Ansprüche mit einer Sicherheitsvorrichtung, die den Betriebszustand der Steuereinheit prüft und, wenn ein Zustand eines fehlerhaften Betriebs der Steuereinheit (100) erfasst wird, automatisch die Unterbrechung der Brennstoff- und Oxidationsmittelversorgung steuert, wobei begleitend ein Nutzer und/oder ein Unterstützungszentrum informiert werden.

26. Vorrichtung nach einem der vorhergehenden Ansprüche, wobei die Steuereinheit (100) eine Wi-Fi-Verbindung mit Nutzersystemen hat.

## Revendications

1. Appareil de production d'énergie, comprenant :
- une pluralité d'unités (2a, 2b) pour produire de l'énergie thermique et électrique, qui peut être délivrée en sortie à une table de cuisson (1) et/ou à des systèmes utilisateur (200, 201, 202, 203) externes à ladite table de cuisson (1) ;
- un système d'alimentation apte à faire entrer un comburant et un combustible dans lesdites unités de production d'énergie (2a, 2b) ;
- un système de distribution (30) pour ladite énergie thermique et électrique produite ; et
- une unité de commande programmable par l'utilisateur (100), apte à régler la puissance délivrée en sortie par lesdites unités de production d'énergie (2a, 2b) et à actionner ledit système d'alimentation et ledit système de distribution (30) ;
dans lequel un premier ensemble desdites unités de production d'énergie (2a) est intégré dans des unités de cuisson respectives (3a) pour la préparation d'aliments au travers de la transmission d'énergie thermique ; et
**caractérisé en ce qu'**il comprend en outre un second ensemble desdites unités de production d'énergie (2b), thermiquement isolé par rapport à la table de cuisson (1) ;
et **en ce que** chacune desdites unités de production d'énergie desdits premier et second ensembles (2a ; 2b) est une capsule (40, 40a ; 40b) apte à loger une pastille d'activation (50) sur laquelle lesdits comburant et combustible de production d'énergie thermique et/ou d'énergie électrique sont mis en écoulement,
dans lequel ladite pastille (50) est accompagnée de piles à combustible et produit de l'énergie thermique et de l'énergie électrique sous la forme d'un courant continu.

2. Appareil selon la revendication 1, dans lequel ladite capsule (40, 40a ; 40b) possède des parois ayant une structure en sandwich, comprenant :
- une première couche interne (41) fournissant un revêtement protecteur ;
- une deuxième couche intermédiaire (42) ayant des fins d'isolation ; et
- une troisième couche externe (43) ayant des fins de type enveloppe.

3. Appareil selon la revendication 1 ou 2, dans lequel ladite capsule (40a) dudit premier ensemble d'unités de production d'énergie (2a) intègre un siège pour ladite pastille d'activation (50) obtenu au travers de la coopération desdites parois avec un couvercle (55), lesdites parois étant mises en forme pour s'adapter avec ledit couvercle (55) de façon à définir un évidement fermé (51) où ladite pastille d'activation (50) est logée.

4. Appareil selon la revendication 3, dans lequel lesdites parois intègrent une cavité.

5. Appareil selon la revendication 2, dans lequel ladite capsule (40b) dudit second ensemble d'unités de production d'énergie (2b) possède des parois fournissant une enceinte fermée (53), thermiquement isolée sur tous les côtés, apte à loger ladite pastille d'activation (50).

6. Appareil selon l'une des revendications précédentes, dans lequel ladite pastille d'activation (50) possède une pluralité de conduits sensiblement en forme de bobine (10).

7. Appareil selon l'une des revendications précédentes, dans lequel ladite pastille (50) est constituée de matériau réfractaire réactif et protégée par un revêtement imperméable externe.

8. Appareil selon l'une des revendications 6 ou 7, lorsque prise en dépendance de l'une des revendications 1 à 4, dans lequel les bobines (10) de ladite pastille (50) sont en contact avec une surface interne dudit couvercle (55) de façon à optimiser le transfert de chaleur vers ledit couvercle (55).

9. Appareil selon l'une des revendications 6 à 8, lorsque prise en dépendance de l'une des revendications 1 à 4, dans lequel lesdites bobines (10) de ladite pastille (50) sont immergées dans un fluide vecteur apte à collecter, à partir de la surface en contact avec les bobines (10), une partie de la chaleur produite par la pastille (50) et pour l'emporter au travers dudit système de distribution (30) vers des échangeurs de chaleur externes à la capsule (40).

10. Appareil selon l'une quelconque des revendications 3 à 9, revendication 5 exclue, dans lequel entre ledit couvercle (55) et ladite pastille (50) est obtenu un espace d'air (80) apte à contenir un fluide conducteur de chaleur apte à favoriser un échange de chaleur de ladite pastille (50) audit couvercle (55) au travers de mouvements convectifs.

11. Appareil selon la revendication 10, dans lequel ledit échange de chaleur est amplifié par un premier ensemble de broches (82) et un second ensemble de broches (81), sortant de la surface de la pastille (50) exposée audit fluide et du couvercle (55), respectivement.

12. Appareil selon la revendication 11, dans lequel lesdits mouvements convectifs sont facilités par des cloisons perforées (83) situées à proximité de la base desdites broches (81, 82).

13. Appareil selon l'une quelconque des revendications précédentes, comprenant un système de refroidissement à base de fluide situé au-dessous de ladite pastille (50) pour empêcher une surchauffe de cette dernière.

14. Appareil selon l'une quelconque des revendications précédentes, dans lequel ledit système de distribution comprend une station de conversion (31) pour la conversion en courant alternatif de ladite énergie électrique, avant la sortie vers lesdits systèmes utilisateur.

15. Appareil selon l'une quelconque des revendications 9 à 14, dans lequel ledit fluide vecteur est l'électrolyte des piles à combustible.

16. Appareil selon l'une quelconque des revendications précédentes, dans lequel des fumées chaudes produites par la réaction dudit combustible avec ledit comburant sont transportées au travers dudit système de distribution (30 ; 60) vers des échangeurs de chaleur externes à la capsule (40).

17. Appareil selon l'une quelconque des revendications 3 à 16, revendication 5 exclue, dans lequel chacune dudit premier ensemble d'unités de production d'énergie (2a) est incorporée dans ladite table de cuisson (1), la configuration étant telle que sur chaque couvercle respectif (55) dudit premier ensemble d'unités de production d'énergie (2a) est obtenue une unité respective (3a) pour la cuisson d'aliments au moyen de l'énergie thermique transmise à travers ledit couvercle (55).

18. Appareil selon la revendication précédente, dans lequel chacune desdites unités de cuisson (3a) comprend une première couche protectrice interne (84) et une deuxième couche protectrice externe (85) présentant un faible coefficient d'adhésion et applicable en contact avec ledit couvercle (55) et en contact avec un récipient de cuisson (90), respectivement ; et une troisième couche (86), intermédiaire entre lesdites première et deuxième couches (84, 85), constituée d'un matériau mou, flexible et conducteur de chaleur, l'agencement étant tel que les bords desdites couches superposées (84, 85, 86) sont pincés par un système de couplage périphérique.

19. Appareil selon la revendication précédente, dans lequel ledit système de couplage périphérique comprend un cadre (87) apte à pincer lesdites couches (84, 85, 86) contre une surface (88) de ladite table de cuisson (1).

20. Appareil selon l'une des revendications précédentes, dans lequel ladite unité de commande (100) comprend un panneau de commande (110) situé sur ladite table de cuisson (1), comprenant des interfaces d'entrée de données (120) et d'affichage (130) aptes à être sélectivement mises en fonctionnement par un utilisateur.

21. Appareil selon la revendication précédente, dans lequel ledit panneau de commande (110) comprend en outre un haut-parleur (140) et un microphone (150) pour la signalisation acoustique et/ou l'interaction vocale entre un utilisateur et ladite unité de commande (100).

22. Appareil selon l'une des revendications précédentes, dans lequel ladite unité de commande (100) est en communication bidirectionnelle avec des moyens de détection locaux (70, 71, 72) positionnés le long dudit système d'alimentation et/ou le long dudit système de distribution et/ou au niveau de ladite unité de production d'énergie.

23. Appareil selon la revendication précédente lorsque prise en dépendance de l'une des revendications 18 à 22, dans lequel lesdits moyens de détection locaux (70, 71, 72) comprennent des sondes (72) pour détecter les températures desdites fumées chaudes produites par la réaction dudit combustible avec ledit comburant, de sorte qu'un signal proportionnel soit envoyé à ladite unité de commande (100) pour le réglage du débit de comburant et de combustible.

24. Appareil selon l'une des revendications précédentes, comprenant des moyens pour la communication à distance entre un utilisateur et/ou un centre d'assistance et ladite unité de commande, pour signaler l'état de fonctionnement de ladite table de cuisson (1), ainsi que des moyens d'actionnement appropriés pour la transmission d'instructions à distance correspondantes.

25. Appareil selon l'une des revendications précédentes, comprenant un dispositif de sécurité qui vérifie l'état de fonctionnement de ladite unité de commande et, lorsqu'un état de fonctionnement incorrect de l'unité de commande (100) est détecté, ordonne automatiquement l'interruption de l'alimentation en combustible et en comburant, en informant de manière concomitante un utilisateur et/ou un centre d'assistance.

26. Appareil selon l'une des revendications précédentes, dans lequel ladite unité de commande (100) est en connexion Wi-Fi avec lesdits systèmes utilisateur.
